# EUROPÄISCHE PATENTANMELDUNG

(11) **EP 2 067 742 A1**
(43) Veröffentlichungstag der Anmeldung: **10.06.2009**
(21) Anmeldenummer: 08020136.1
(22) Anmeldetag: 19.11.2008
(51) Int. Cl.: C01B 31/28

(54) **Verfahren zur Herstellung von Phosgen mit reduzierter CO-Emission**

(30) Priorität: 29.11.2007 DE 102007057462
(71) Anmelder: Bayer MaterialScience AG, 51368 Leverkusen (DE)
(72) Erfinder: Kauth, Hermann, Dr., 47803 Krefeld (DE); Blaschke, Ulrich, Dr., 47829 Krefeld (DE); Kaschube, Wilfried, Dr., 40789 Monheim (DE); Kebler, Klaus, 47918 Tönisvorst (DE); Kords, Christian, 47829 Krefeld (DE); Elsner, Thomas, Dr., 40595 Düsseldorf (DE)

(57) **Zusammenfassung**

Die Anmeldung betrifft ein Verfahren zur kontinuierlichen Herstellung von Phosgen aus Chlor und CO unter Verminderung der Kohlenmonoxid-Emission (CO-Emission).

## Beschreibung

Die Anmeldung betrifft ein Verfahren zur kontinuierlichen Herstellung von Phosgen aus Chlor und CO unter Verminderung der Kohlenmonoxid-Emission (CO-Emission).

CO-Emissionen gewinnen im Zuge von Kapazitätserweiterungen in Phosgen-verarbeitenden Produktionsanlagen zunehmend an Bedeutung.

Die kontinuierliche Herstellung von Phosgen in sogenannten Phosgenvereinigern - im Folgenden auch kurz als Vereiniger bezeichnet - ist bekannt und in ihren Grundzügen ausführlich beschrieben, so z.B. in "Ullmann", 5. Auflage, Band 19, S. 411 ff., Kap. 3. "Production".

Dabei wird ein gasförmiges Gemisch von CO und Chlor in einem Phosgenvereiniger in annähernd stöchiometrischem Verhältnis kontinuierlich über gekörnte Aktivkohle geleitet, wobei zur Vermeidung von größeren Rest-Chlorgehalten im gebildeten Phosgen das CO im leichten Überschuss dosiert wird. Ein besonders reines Phosgen, das zur Herstellung von hochwertigen Kunststoffen, wie z.B. Polycarbonaten oder Polyurethanen aus Diisocyanaten erforderlich ist, wird durch selektive Kondensation des aus dem Phosgenvereinigers gewonnenen Rohphosgens gewonnen. Dabei werden niedrig siedende Nebenprodukte, wie z.B. CO und weitere Restgase abgetrennt und über den Abluftweg aus dem System ausgeschleust. Bei größeren, mehrfach vorhandenen und gegebenenfalls mit einander verbundenen Anlagen dieser Art entstehen bei dieser Fahrweise im kontinuierlichen Betrieb durchaus beachtenswerte Frachten an CO-Emissionen bzw. CO-Gas-Konzentrationen, die hinsichtlich der Umweltbelastung und auch hinsichtlich der Bildung zündfähiger Gasgemische mit Luftsauerstoff problematisch werden können und daher vermieden werden müssen.

Die Aufgabe, die der vorliegenden Erfindung zugrunde lag, bestand demnach darin, bei der Herstellung von Phosgen aus Chlor und CO durch geeignete, vorzugsweise technisch einfache und kostengünstige Maßnahmen die CO-Emissionen deutlich zu verringern.

Überraschend wurde gefunden, dass die Umsetzung der CO-enthaltenden Restgase aus dem oder den Kondensator(en) des bei der Umsetzung mit Chlor und CO zu Phosgen gewonnenen Rohphosgens unter Zuführung von weiterem Chlor in wenigstens einem Nachvereiniger zu weiterem Phosgen die CO-Emission deutlich verringern.

Gegenstand der vorliegenden Erfindung ist demnach ein Verfahren zur kontinuierlichen Herstellung von Phosgen, wobei aus CO und Chlor in Gegenwart wenigstens eines Katalysators in wenigstens einem ersten Vereiniger Phosgen hergestellt wird, anschließend in wenigstens einem ersten Kondensator das Phosgen kondensiert und CO-enthaltende Restgase abgetrennt werden, dadurch gekennzeichnet, dass die CO-enthaltenden Restgase aus dem oder den ersten Kondensator(en) unter Zuführung von weiterem Chlor in wenigstens einem Nachvereiniger zu weiterem Phosgen umgesetzt werden und anschließend das im Nachvereiniger hergestellte Phosgen in wenigstens einem Nachkondensator kondensiert und nicht kondensierte Restgase abgetrennt werden.

Bevorzugt wird dabei die Zuführung von weiterem Chlor für die Umsetzung in dem oder den Nachvereiniger(n) durch Analyse des CO-Gehaltes der in dem oder den ersten Kondensator(en) abgetrennten CO-enthaltenden Restgase geregelt. Besonders bevorzugt wird die Zuführung von weiterem Chlor für die Umsetzung in dem oder den Nachvereiniger(n) so geregelt, dass in dem Gasgemisch, welches dem oder den Nachvereiniger(n) zugeführt wird ein CO-Überschuss von wenigstens 1,5 Vol.-% bezogen auf zugeführtes Chlor vorhanden ist.

Die in dem oder den Nachkondensator(en) abgetrennten nicht kondensierten Restgase werden bevorzugt aus dem Verfahren ausgeschleust und der Phosgenvernichtung zugeführt.

Als Katalysator wird bevorzugt Aktivkohle und/oder Koks verwendet. Besonders bevorzugt ist dabei Aktivkohle mit einer spezifischen Oberfläche von mindestens 500 m²/g, vorzugsweise mehr als 900 m²/g und ein Porenvolumen für Porendurchmesser von 1 bis 100 nm von mindestens 0,06 ml/g, vorzugsweise von mehr als 0,07 ml/g. Die Aktivkohle wird vorzugsweise in Granulatform eingesetzt. Besonders bevorzugt sind Granulate mit einem Durchmesser zwischen 3 und 8 mm, ganz besonders bevorzugt zwischen 3 und 5 mm. Als Koks kann beispielsweise Zechenbrechkoks verwendet werden.

Als Vereiniger und/oder Nachvereiniger werden bevorzugt Wärmetauscher, besonders bevorzugt Wärmetauscher in Form von Röhrenreaktoren verwendet. Es können einer oder mehrere solcher Vereiniger und/oder Nachvereiniger verwendet werden. Diese können hintereinander oder parallel angeordnet betrieben werden. In bevorzugten Ausführungsformen können mehrere Vereiniger und/oder mehrere Nachvereiniger, insbesondere mehrere Vereiniger im Parallelbetrieb verwendet werden. Für die großtechnische Anwendung wird die Umsetzung von Chlor und CO bevorzugt in einem oder mehreren Vereinigern in Form von Türmen - sogenannten Phosgenvereinigertürmen - durchgeführt. In bevorzugten Ausführungsformen können mehrere solcher Türme im Parallelbetrieb eingesetzt werden. Bei den Wärmetauschern, vorzugsweise in Form von Türmen handelt es sich bevorzugt um Röhrenreaktoren, die eine Vielzahl von Reaktionsrohren mit einem Durchmesser von maximal 70 mm, vorzugsweise von maximal 60 mm, besonders bevorzugt von maximal 50 mm enthalten. Diese Reaktionsrohre sind mit dem Katalysator für die Umsetzung von CO und Chlor zu Phosgen gefüllt. Die Reaktionsrohre sind bevorzugt senkrecht angeordnet, werden von einem Kühlmittel in dem die Reaktionsrohre seitlich umgebenden Kühlmittelraum umströmt und enden oben und unten jeweils in einem Gas-Raum des Röhrenreaktors, der von dem Kühlmittelraum getrennt ist und in dem die Gase zusammenströmen bzw. sich auf die einzelnen Rohre verteilen. Solche Röhrenreaktoren sind dem Fachmann bekannt. Die Befüllung der Reaktionsrohre mit dem Katalysator erfolgt vorzugsweise und vorteilhafterweise so, dass der Druckverlust über jedes einzelne Reaktionsrohr des Röhrenreaktors nahezu identisch ist. Dadurch wird eine gleichmäßige Durchströmung aller Reaktionsrohre beim Betreiben des Vereinigers ermöglicht.

Im erfindungsgemäßen Verfahren werden die Gase CO und Chlor vor dem Eintritt in den unteren Gas-Raum des Röhrenreaktors gemischt, vorzugsweise durch statische Mischer, und das Gasgemisch von unten nach oben durch die Reaktionsrohre geleitet. Am Kopf des oberen Gas-Raums des Röhrenreaktors wird das gebildete Phosgen abgenommen.

Ein besonders geeigneter Werkstoff für solche Röhrenreaktoren ist Normalstahl.

Die bei der Umsetzung von CO mit Chlor entstehenden Temperaturen im Inneren des Katalysator-Kontaktes, bevorzugt Aktivkohle-Kotaktes können bis zu 500°C betragen. Daher müssen die freiwerdenden hohen Wärmemengen sehr effektiv abgeführt werden, um partielle Überhitzungen des Reaktors sicher zu vermeiden. Dies gilt insbesondere für den unteren Bereich des Reaktors, wo noch nicht umgesetztes Chlor vorliegt. Dort könnte es bei Überhitzungen zum sogenannten Chlor-Eisen-Brand kommen. Daher kann es von Vorteil sein, die Reaktionsrohre am unteren Ende des Röhrenreaktors, d.h. dort wo das CO-Chlor-Gemisch eintritt, bevorzugt mit katalytisch nicht aktiven Materialien, wie z.B. mit Sattelkörpern aus Keramik, und erst darüber die Reaktionsrohre mit dem Katalysator zu befüllen. Diese Befüllung mit katalytisch nicht aktiven Materialien kann bis zu einer Höhe von einigen Zentimetern erfolgen.

Die Reaktionsrohre sind so in dem Röhrenreaktor angeordnet, dass sie von einem flüssigen Kühlmedium ausreichend umspült werden, um die freiwerdende Reaktionswärme bei der Bildung von Phosgen aus Chlor mit CO hinreichend schnell abführen zu können. Es gibt verschiedene Methoden der Abführung bzw. der Nutzung der Reaktionswärme bei der Vereinigung von Chlor mit CO.

Bei Verfahren mit Kühltemperaturen oberhalb 100°C wird ein Teil der Reaktionswärme auf hohem Temperaturniveau mit indirekten Wärmetauschern zur Erzeugung von Dampf genutzt. Die heißen Reaktionsgase aus dem ersten Vereiniger werden in einem zweiten Vereiniger bei tieferen Temperaturen so umgesetzt, dass der freie Chlorgehalt im Phosgen möglichst gering ist. Ein solches Verfahren ist dem Fachmann bekannt und wird beispielsweise in der DE-A 33 27 274 ausführlich beschrieben.

Andere Verfahren arbeiten bei Kühltemperaturen unter 100°C und verwenden entweder eine Siedekühlung durch Verdampfen eines Wärmeträgers in einem indirekt gekühlten Siedekühlkreislauf oder eine klassische Flüssigkeitskühlung, die ebenfalls indirekte Kühlkreisläufe benutzt. Solche Verfahren sind dem Fachmann bekannt.

Für das erfindungsgemäße Verfahren sind sowohl Kühlverfahren bei Kühltemperaturen oberhalb von 100°C als auch solche bei Kühltemperaturen unter 100°C einsetzbar. Bevorzugt wird ein Kühlverfahren bei Kühltemperaturen unter 100°C eingesetzt, besonders bevorzugt ein solches, dass eine klassische Flüssigkeitskühlung verwendet. Als Kühlmedium dient dabei bevorzugt Wasser, insbesondere vollentsalztes Wasser (VE-Wasser), oder verdünnte wässrige Alkali-Lösung, insbesondere solche Alkali-Lösung mit einem pH-Wert von 8 bis 10. Die verdünnte wässrige Alkali-Lösung kann beispielsweise eine verdünnte wässrige NaOH oder KOH-Lösung sein. Das wässrige Kühlmedium ist aus Sicherheitsgründen bevorzugt Teil eines geschlossenen Kreislaufs mit Ausgleichsbehälter und Kreislaufpumpe, dessen Kreislaufkühler von außen indirekt gekühlt wird.

Besonders bevorzugt ist bei Kühlung mit wässrigen Kühlmedien der Gasdruck in den Reaktionsrohren des Röhrenreaktors stets höher als der Druck im wässrigen Kühlmittelkreislauf, um im Leckagefall das Eindringen von Wasser in die Reaktionsrohre zu vermeiden, da ein solches Eindringen zu gefährlichen Nebenreaktionen führen könnte.

Bevorzugt können zudem im Kühlmittelkreislauf der pH-Wert und/oder die elektrische Leitfähigkeit ständig mittels pH-Elektode oder Leitfähigkeitssonde überwacht werden, um das Eindringen von Phosgen in den Kühlmittelkreislauf und damit Leckagen frühzeitig zu erkennen.

Der Kühlmittelkreislauf ist vorzugsweise über den Ausgleichsbehälter unter geregeltem Stickstoffüberdruck mit der Phosgen-Vernichtungseinheit verbunden. Der Kühlmittelkreislauf durchströmt den Bereich um die Reaktionsrohre bevorzugt von unten nach oben. Dabei wird der Kühlmittelstrom besonders bevorzugt durch geeignet angeordnete Trennbleche zwischen den Rohren so gelenkt, dass es zu einem ständigen Wechsel zwischen tangentialer und senkrechter Anströmung der Reaktionsrohre kommt.

Das erfindungsgemäße Verfahren wird bevorzugt mit Rohstoffen hoher Reinheit betrieben, da die Reinheit der Rohstoffe Einfluss auf den Verfahrensablauf und die Qualität des gebildeten Phosgens hat. Eine hohe Reinheit von CO- und Chlorgas ermöglicht es, die hohen Reinheitsanforderungen an das daraus gebildete Phosgen zu erfüllen, die durch die geforderten Qualitätsansprüche der daraus herzustellenden Polymeren vorgegeben sind.

Bevorzugt eingesetztes CO-Gas ist entschwefelt und enthält nicht mehr als 5 mg/m³ Schwefel vorzugsweise nicht mehr als 2 mg/m³ Schwefel - Schwefel-Gehalt bezogen auf das Volumen des CO-Gases - an organischen oder anorganischen Schwefelverbindungen. Damit kann die Bildung von Schwefelchloriden als Nebenprodukte des Phosgens im Vereiniger, die in den nachfolgenden Polymersynthesen unerwünschte Nebenreaktionen eingehen können, vermieden bzw. deutlich reduziert werden. Da Methan mit Chlor bei den im Vereiniger vorherrschenden Temperaturen ungewünschten Tetrachlorkohlenstoff bildet, ist bevorzugt der Gehalt an Methan im eingesetzten CO-Gas nicht größer als 50 Vol.-ppm, besonders bevorzugt nicht größer als 30 Vol.-ppm. Der Gehalt an Wasserstoff im eingesetzten CO-Gas ist bevorzugt kleiner als 2,0 Vol.-%, vorzugsweise kleiner als 1,5 Vol.-%, da größere Mengen an Wasserstoff im eingesetzten CO-Gas mit Chlor unter Umständen unkontrollierbar zu Chlorwasserstoff reagieren (Chlorknallgas-Reaktion), der darüber hinaus auch korrosive Wirkungen auf die Apparatematerialien haben kann. Der Gehalt an Sauerstoff im eingesetzten CO-Gas ist zur Vermeidung zündfähiger Gasgemische bevorzugt kleiner als 0,15 Vol.-%. Der Gehalt an Wasser im CO-Gas ist bevorzugt kleiner als 10 mg/m³, wodurch Nebenreaktionen und Korrosionen in den Anlagenteilen vermieden werden können. Das eingesetzte CO-Gas kann beispielsweise durch Partialoxidation von Kohlenstoff Trägern, wie z.B. in DE-A 103 48 116 beschrieben, und nachfolgende Entschwefelung, wie z.B. in EP-A 1 590 295 beschrieben, gewonnen werden, oder es kann aus dem Reformer-Prozess für Methan nach den Gas-Reinigungsschritten entnommen werden. Der Reformer-Prozess ist dem Fachmann bekannt.

Das eingesetzte Chlorgas enthält aus den gleichen Gründen, wie oben unter CO-Gas genannt, bevorzugt weniger als 0,1 Vol.-% Sauerstoff und bevorzugt weniger als 250 mg/m³ Wasser. Das Chlor-Gas kann z.B. durch Natriumchlorid- oder durch Chlorwasserstoff-Elektrolyse gewonnen werden. Bevorzugte Elektrolyseverfahren sind das Membranverfahren und das Amalgamverfahren. Diese Elektrolyseverfahren sind dem Fachmann bekannt. Das Chlorgas enthält vorzugsweise weniger als 80 mg/m³ an Brom und vorzugsweise weniger als 10 mg/m³ Stickstofftrichlorid.

Um einen möglichst vollständigen Umsatz von Chlor bzw. einen möglichst geringen Rest-ChlorGehalt im herzustellenden Phosgen bei den optimalen Reaktionstemperaturen zu erreichen, wird die Reaktion von CO und Chlor bevorzugt mit einem Überschuss an CO bezogen auf Chlor von mindestens 1,1 Vol.-%, gefahren. Die Austritts-Temperatur des Phosgen-Gases am Kopf des Vereinigers ist möglichst niedrig zu halten, da sich mit zunehmender Temperatur das Reaktions-Gleichgewicht weiter in Richtung der Edukte verschiebt. So sind beispielsweise bei 200°C noch ca. 0,4 Vol.-% des Phosgens in CO und Chlor dissoziiert, bei 100°C sind es noch ca. 50 ppm des Phosgens. Es kann daher von Vorteil sein, den Vereiniger so zu konstruieren und zu betreiben, dass die Phosgenaustritts-Temperatur vorzugsweise unter 75°C, besonders bevorzugt unter 65°C liegt, um bevorzugt Rest-Chlorgehalte im herzustellenden Phosgen von weniger als 5 Vol.-ppm, besonders bevorzugt von weniger als 1 Vol.-ppm, bezogen auf das Gesamtvolumen des Phosgens, zu erreichen. Dies kann beispielsweise durch eine Begrenzung des Durchsatzes der Gase durch den Reaktor oder durch eine ausreichende Dimensionierung der Reaktionsrohre erreicht werden. Das so hergestellte Roh-Phosgen kann neben den eingesetzten Überschuss-Mengen an CO noch Inertgase, wie z.B. Stickstoff und/oder Kohlendioxid, und gegebenenfalls Spuren an Chlor, Chlorwasserstoff, Wasserstoff, Tetrachlorkohlenstoff u.a. enthalten.

Die kondensierbaren gasförmigen Nebenbestandteile des Rohphosgens werden im an die Umsetzung von CO und Chlor im Vereiniger nachfolgenden Verfahrensschritt im ersten Phosgen-Kondensator abgetrennt. Dazu wird das Rohphosgen vorzugsweise bei Temperaturen von unter -10°C und Atmosphärendruck oder leichtem Überdruck bis 3 bar (absolut) kondensiert, in einer gekühlten Flüssig-Phosgenvorlage gesammelt und von dort zur weiteren Umsetzung in entsprechende Anwendungen weitergeleitet. Als Kondensator eignet sich beispielsweise ein Wärmetauscher, in bevorzugten Ausführungsformen ein solcher aus Edelstahl, mit Kühlsole. Solche Kondensatoren sind dem Fachmann bekannt. Durch diese Abtrennung der flüchtigen Bestandteile, die bei diesen Temperaturen nicht kondensieren, wird das ursprüngliche Rohphosgen gereinigt. Es kann in dieser Reinheit zur Herstellung von Polymeren oder deren Vorstufen verwendet werden.

Der erste Phosgenkondensator ist abgasseitig mit wenigstens einem (Phosgen-)Nachvereiniger verbunden, in den die bei diesen Temperaturen nicht kondensierbaren Gase abgeführt werden. Diese flüchtigen Bestandteile enthalten zu einem wesentlichen Anteil den in der Phosgenherstellung im ersten Vereiniger nicht umgesetzten CO-Überschuss. Dieser Restgasstrom aus dem ersten Kondensator enthaltend den nicht umgesetzten CO-Überschuss wird in einem anschließenden Verfahrensschritt in wenigstens einem Nachvereiniger mit den erforderlichen Mengen an Chlor versetzt und zu weiterem Phosgen umgesetzt. Bevorzugt wird dabei die Zuführung der erforderlichen Mengen an Chlor für die Umsetzung in dem oder den Nachvereiniger(n) durch Analyse des CO-Gehaltes der in dem oder den ersten Kondensator(en) abgetrennten CO-enthaltenden Restgase geregelt.

Der oder die Nachvereiniger sind im Prinzip baugleich ist mit dem oder den ersten Vereinigern, die für den ersten Schritt der Phosgen-Herstellung bereits beschrieben wurden. Auch hier ist die Verwendung eines Nachvereiniger oder mehrerer Nachvereiniger, vorzugsweise im Parallelbetrieb, möglich. Die Dimensionierung des oder der Nachvereiniger erfolgt derart, dass auch stark unterschiedliche Mengenströme von Abgas aus dem oder den ersten Kondensatoren problemlos umgesetzt werden können. Der oder die Nachvereiniger können auf die gleiche Weise gekühlt werden, wie für den oder die ersten Vereiniger beschrieben wurde. Bevorzugt werden der oder die Nachvereiniger wegen des verhältnismäßig geringen Phosgenumsatzes bevorzugt bei Kühltemperaturen kleiner 100°C durch klassische Flüssigkeitskühlung mit wässrigen Medien als Kühlmittel betrieben, wobei auch hier vorzugsweise ein indirekter Kühlkreislauf vorhanden ist.

Der CO-Gehalt des Abgases aus dem ersten Kondensator wird kontinuierlich überwacht. Entsprechend wird die zugeführte Menge an Chlorgas in dem oder den Nachvereiniger(n) so geregelt, dass vorzugsweise ein CO-Überschuss bezogen auf Chlor von mindestens 1,5 Vol.-%, vorzugsweise von mindestens 2 Vol.-% im zum Nachvereiniger zugeführten Gasgemisch vorhanden ist. Auch in dem Phosgen, welches aus dem Nachvereiniger abgeführt wird, ist es wünschenswert, den Rest-Chlorgehalt aus den bereits genannten Gründen möglichst gering zu halten. Daher wird auch der Nachvereiniger vorzugsweise so betrieben, dass die Phosgen-Austritts-Temperatur am Kopf des Nachvereinigers bevorzugt unter 75°C, besonders bevorzugt unter 65°C liegt.

Das in dem oder den Nachvereiniger(n) hergestellte Phosgen wird in wenigstens einem (Phosgen)Nachkondensator vorzugsweise bei Temperaturen unter -10°C bei Atmosphärendruck oder leichtem Überdruck bis 3 bar (absolut)kondensiert und so von den noch verbleibenden Restgasen getrennt. Als Nachkondensatoren eignen sich beispielsweise die bereits als erste Kondensatoren beschriebenen Wärmetauscher. Die abgetrennten Restgase werden dann vorzugsweise direkt der Phosgen-Vernichtungseinheit zugeleitet, um dort vollständig und gefahrlos vernichtet zu werden. Die Fracht an in den aus dem oder den Nachkondensator(en) Restgasen enthaltenem, nicht umgesetztem CO-Gas ist im Vergleich zu der CO-Fracht in dem Restgas aus dem oder den ersten Kondensator(en) wesentlich geringer.

Das im Nachkondensator verflüssigte Phosgen wird einer Flüssig-Phosgen-Vorlage zugeleitet. Bevorzugt wird das in dem oder den ersten Kondensator(en) und dem oder den Nachkondensator(en) kondensierte Phosgen einer gemeinsamen Flüssig-Phosgen-Vorlage zugeleitet. Damit wird der CO-Überschuss zum größten Teil in verwertbares Phosgen umgewandelt.

Die Phosgen-Vernichtungs-Einheit arbeitet nach bekannten Verfahrens-Prinzipien, die z.B. in "Ullmann", 5. Auflage, Band 19, S. 411 ff., Kap. 6. "Waste-Gas Treatment" beschrieben sind. In einer bevorzugten Verfahrensvariante wird die Phosgenvernichtung an Aktivkohle mit Wasser durchgeführt.

Das erfindungsgemäße Verfahren bietet eine technisch einfache und kostengünstige Möglichkeit zur Verringerung der CO-Emission, weil einerseits keine neue Verfahrenstechnik mit fremdem Stoffströmen erforderlich ist und gegebenenfalls auf bestehende Apparate bzw. Produktionsanlagen zurückgegriffen werden kann, und weil andererseits das überschüssige CO zu nutzbarem Phosgen umgesetzt wird.

Überraschenderweise wurde weiterhin gefunden, dass die Umsetzung von CO mit Chlor im erfindungsgemäßen Verfahren deutlich verbessert werden und auf diese Weise zudem die benötigten CO-Überschussmengen deutlich reduziert werden können, wenn die Befüllung des Röhrenreaktors mit dem Katalysator, bevorzugt Aktivkohle, so vorgenommen wird, dass nicht nur die Reaktionsrohre gleichmäßig mit Aktivkohle voll gefüllt sind, sondern auch im oberen Raum über den Reaktionsrohren, in dem die Reaktionsgase wieder zusammengeführt werden, eine Schicht Aktivkohle und gegebenenfalls Koks vorhanden ist.

In besonders bevorzugten Ausführungsformen des erfindungsgemäßen Verfahrens weisen daher die verwendeten Röhrenreaktoren parallele senkrecht angeordnete Reaktionsrohre auf, die von einem Kühlmittel in dem die Reaktionsrohre seitlich umgebenden Kühlmittelraum umströmt werden und die an ihrem oberen und unteren Ende jeweils in einem oberen und unteren Gasraum des Röhrenreaktors enden, wobei die Reaktionsrohre des Röhrenreaktors mit Aktivkohle gefüllt sind und der obere Gasraum des Röhrenreaktors zusätzlich über den Reaktionsrohren eine Schicht Aktivkohle und/oder Koks enthält. Diese Schicht Aktivkohle und gegebenenfalls Koks hat vorzugsweise eine Dicke von mindestens 10 cm, besonders bevorzugt von 10 bis 40 cm. Die Schicht enthaltend Aktivkohle und/oder Koks kann in bevorzugten Ausführungsformen auch eine untere Schicht Aktivkohle und eine obere Schicht Koks aufweisen, wobei besonders bevorzugt die Dicke der Koksschicht weniger als 20 % der Dicke an der Gesamtschicht aus Koks und Aktivkohle ausmacht. Der hierbei gegebenenfalls verwendete Koks kann z.B. Zechenbrechkoks sein. Diese zusätzlich vorhandene Schicht an Aktivkohle und gegebenenfalls Koks ermöglicht überraschend - bei sonst gleichen Verfahrensbedingungen - eine bessere Umsetzung der Reaktanden Chlor und CO und damit eine Reduktion des benötigten CO-Überschusses, als bei normaler Befüllung mit Aktivkohle, die nur bis zum Ende der Röhren reicht. Durch diese Reduktion des benötigten CO-Überschusses kann bereits der CO-Gehalt des CO-enthaltenden Restgases aus der Phosgenkondensation verringert werden.

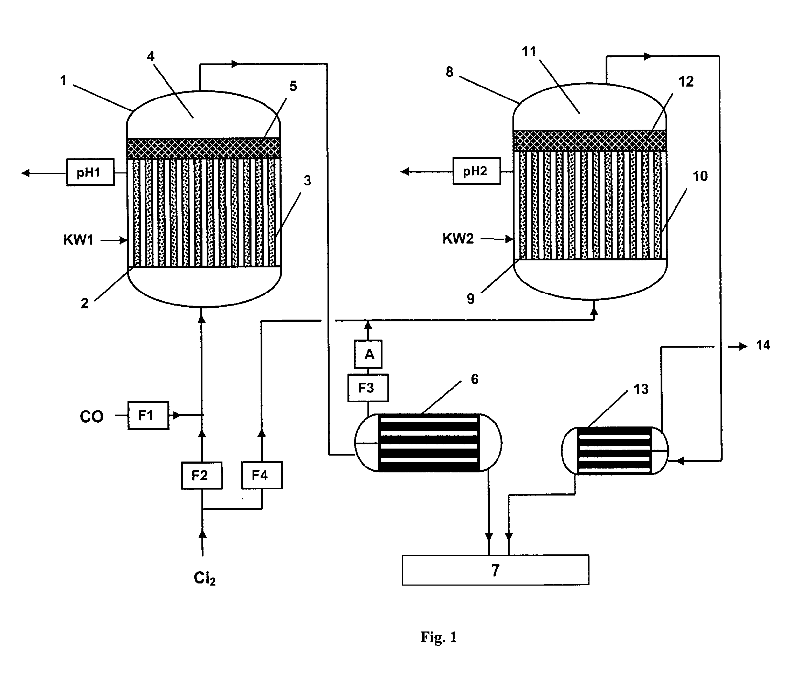

In Fig. 1 ist eine besonders bevorzugte Ausführungform des erfindungsgemäßen Verfahrens beschrieben. Dabei werden CO-Gas (CO) und Chlor-Gas (Cl₂) - jeweils über entsprechende Mengenregler F1 und F2 zugeführt - gemischt und einem ersten Phosgenvereiniger 1, bei dem es sich um einen Röhrenreaktor handelt, zugeführt. In diesem Phosgenvereiniger erfolgt die Kühlung über einen indirekten Kühlkreislauf bei Kühltemperaturen kleiner 100°C durch klassische Flüssigkeitskühlung. Das wässrige Kühlmedium KM1 fließt von unten nach oben durch den Kühlmittelraum 2, der die Reaktionsrohre 3 umspült. Das Kühlmedium wird einer kontinuierlichen pH-Wert Kontrolle (pH1) unterzogen. Die Reaktionsrohre 3 sind mit Aktivkohle als Katalysator gefüllt. Zudem befindet sich im oberen Gasraum 4 des Röhrenreaktors eine Schicht 5 Aktivkohle mit Koks, die eine untere Schicht Aktivkohle mit einer oberen Schicht Koks aufweist. Nach Umsetzung des CO-Chlorgasgemisches im Phosgenvereiniger wird das erhaltene Rohphosgen in einen ersten Phosgenkondensator 6 geleitet, wo Phosgen auskondensiert und einer Flüssig-Phosgen-Vorlage 7 zugeführt wird. Die im ersten Kondensator 6 nicht kondensierbaren Gase werden über eine Mengenregelung F3 in den Nachvereiniger 8 geleitet. Dabei wird der Abgasstrom enthaltend die nicht kondensierbaren Gase aus dem ersten Kondensator kontinuierlich einer Analyse des CO-Gehalts unterzogen (A) und über eine Mengenregelung F4 kontinuierlich entsprechend dem ermittelten CO-Gehalt Chlor zugesetzt. Das Gasgemisch wird dem Nachvereiniger 8 von unten zugeführt. Auch im Nachvereiniger 8 erfolgt die Kühlung über einen indirekten Kühlkreislauf bei Kühltemperaturen kleiner 100°C durch klassische Flüssigkeitskühlung. Das wässrige Kühlmedium KM2 fließt von unten nach oben durch den Kühlmittelraum 9, der die Reaktionsrohre 10 umspült. Das Kühlmedium wird einer kontinuierlichen pH-Wert Kontrolle (pH2) unterzogen. Die Reaktionsrohre 10 sind mit Aktivkohle als Katalysator gefüllt. Zudem befindet sich im oberen Gasraum 11 des Röhrenreaktors eine Schicht 12 Aktivkohle mit Koks, die eine untere Schicht Aktivkohle mit einer oberen Schicht Koks aufweist. Nach Umsetzung des CO-Chlorgasgemisches im Nachvereiniger wird das erhaltene Rohphosgen in einen Nachkondensator 13 geleitet, wo Phosgen auskondensiert und ebenfalls der Flüssig-Phosgen-Vorlage 7 zugeführt wird. Die nicht kondensierbaren Abgase 14 aus dem Nachkondensator werden der Phosgenvernichtung zugeführt.

Das nach dem erfindungsgemäßen Verfahren hergestellte Phosgen kann zur Herstellung von Polymeren oder deren Vorstufen verwendet werden. Typische Vertreter solcher Polymeren oder deren Vorstufen sind beispielsweise Polycarbonate PC, Diphenlycarbonat DPC, Methylendiisocyanat MDI, Toluoldiisocyanat TDI, Hexamethylendiisocyanat HDI.

Die folgenden Beispiele dienen der exemplarischen Erläuterung der Erfindung und sind nicht als Beschränkung aufzufassen.

### Beispiele

773 m³/h gasförmiges Chlor mit einem Gehalt von 99,95 Vol.-% Chlor, 0,01 Vol.-% Wasserstoff, 0,1 Vol.-% Sauerstoff und 15 mg/m³ Wasser und 800 m³/h gasförmiges Kohlenmonoxid mit einem Gehalt von 97,75 Vol.-% Kohlenmonoxid, 0,9 Vol.-% Wasserstoff, 0,12 Vol.-% Sauerstoff, 3 mg/m³ Wasser, 20 Vol.-ppm Methan und 2 mg/m³ Schwefel (Überschuss reines CO bezogen auf reines Chlor von 1,2 Vol.-%) wurden über einen statischen Mischer gemischt und über einen mit Wasser gekühlten ersten Phosgenvereiniger mit Reaktionsrohren enthaltend Aktivkohle des Typs RB4^{®} der Firma NORIT und einer darüber befindlichen Schicht von 20 cm Aktivkohle mit Koks, die eine untere Schicht Aktivkohle mit einer oberen Schicht Koks aufweist, geleitet. Die Durchleitung durch den ersten Vereiniger erfolgte von unten nach oben. Die Austrittstemperatur am Kopf des ersten Phosgenvereinigers betrug 60 °C. Aus dem ca. 95 Vol.-% Phosgen enthaltenden Gasstrom wurde der Großteil des Phosgens in einem ersten Phosgenkondensator bei einer Temperatur von -25 °C bei 1,6 bar (absolut) auskondensiert und einer gekühlten Flüssig-Phosgenvorlage zugeführt.

In den restlichen 38,4 m³/h Gasgemisch wurde der Gehalt an Kohlenmonoxid zu 43 Vol.-% gemessen (16,5 m³/h). Der Restgehalt an Chlor betrug weniger als 1 ppm. Darüber hinaus waren u.a. noch 11 Vol.-% Phosgen in dem Gasgemisch enthalten. Das Gasgemisch wurde mit 15,7 m³/h Chlorgas vermischt, was einem ca. 5 Vol.-%igen Überschuss an reinem Kohlenmonoxid bezogen auf reines Chlor entsprach, und von unten über einen mit Wasser gekühlten Phosgennachvereiniger mit Reaktionsrohren enthaltend eine Aktivkohle des Typs RB4^{®} der Firma NORIT und einer darüber befindlichen Schicht von 20 cm Aktivkohle mit Koks, die eine untere Schicht Aktivkohle mit einer oberen Schicht Koks aufweist, geleitet. Die Austrittstemperatur am Kopf des Phosgen-Nachvereinigers betrug 59 °C. Aus dem ca. 52 Vol.-% Phosgen enthaltenden Gasstrom (Restgehalt an Chlor < 5 ppm ) wurde der Großteil des Phosgens in einem Phosgennachkondensator bei einer Temperatur von -25 °C bei 1,6 bar (absolut) auskondensiert und der gleichen gekühlten Flüssig-Phosgenvorlage zugeführt, wie das Phosgen aus dem ersten Phosgenkondensator. Der Restgasstrom wurde über eine Phosgenvernichtung gefahren und anschließend phosgenfrei an die Umwelt abgegeben. Nach der Phosgenvernichtung betrug der Gehalt an Kohlenmonoxid nur noch 0,82 m³/h, was weniger als 1/20 der Menge entsprach, die noch im Restgas des ersten Phosgenkondensators vorlag.

## Patentansprüche

1. Verfahren zur kontinuierlichen Herstellung von Phosgen, wobei aus CO und Chlor in Gegenwart wenigstens eines Katalysators in wenigstens einem ersten Vereiniger Phosgen hergestellt wird, anschließend in wenigstens einem ersten Kondensator das Phosgen kondensiert und CO-enthaltende Restgase abgetrennt werden, **dadurch gekennzeichnet, dass** die CO-enthaltenden Restgase aus dem oder den ersten Kondensator(en) unter Zuführung von weiterem Chlor in wenigstens einem Nachvereiniger zu weiterem Phosgen umgesetzt werden und anschließend das im Nachvereiniger hergestellte Phosgen in wenigstens einem Nachkondensator kondensiert und nicht kondensierte Restgase abgetrennt werden.

2. Verfahren gemäß Anspruch 1, **dadurch gekennzeichnet, dass** die Zuführung von weiterem Chlor für die Umsetzung in dem oder den Nachvereiniger(n) durch Analyse des CO-Gehaltes der in dem oder den ersten Kondensator(en) abgetrennten CO-enthaltenden Restgase geregelt wird.

3. Verfahren gemäß Anspruch 1 oder 2, **dadurch gekennzeichnet, dass** die Zuführung von weiterem Chlor für die Umsetzung in dem oder den Nachvereiniger(n) so geregelt wird, dass in dem Gasgemisch, welches dem oder den Nachvereiniger(n) zugeführt wird ein CO-Überschuss von wenigstens 1,5 Vol.-% bezogen auf zugeführtes Chlor vorhanden ist.

4. Verfahren gemäß wenigstens einem der Ansprüche 1 bis 3, **dadurch gekennzeichnet, dass** die in dem oder den Nachkondensator(en) abgetrennten nicht kondensierten Restgase aus dem Verfahren ausgeschleust und der Phosgenvernichtung zugeführt werden.

5. Verfahren gemäß wenigstens einem der Ansprüche 1 bis 4, **dadurch gekennzeichnet, dass** als Katalysator Aktivkohle und/oder Koks verwendet werden.

6. Verfahren gemäß wenigstens einem der Ansprüche 1 bis 5, **dadurch gekennzeichnet, dass** als Vereiniger und/oder Nachvereiniger Wärmetauscher in Form von Röhrenreaktoren verwendet werden.

7. Verfahren gemäß Anspruch 7, **dadurch gekennzeichnet, dass** die verwendeten Röhrenreaktoren parallele senkrecht angeordnete Reaktionsrohre aufweisen, die von einem Kühlmittel in dem die Reaktionsrohre seitlich umgebenden Kühlmittelraum umströmt werden und die an ihrem oberen und unteren Ende jeweils in einem oberen und unteren Gasraum des Röhrenreaktors enden, wobei die Reaktionsrohre des Röhrenreaktors mit Aktivkohle gefüllt sind und der obere Gasraum des Röhrenreaktors zusätzlich über den Reaktionsrohren eine Schicht Aktivkohle und/oder Koks enthält.

8. Verfahren gemäß Anspruch 7 oder 8, **dadurch gekennzeichnet, dass** die Reaktionsrohre am unteren Ende mit katalytisch nicht aktiven Materialien und erst darüber mit Aktivkohle gefüllt sind.

9. Verfahren gemäß wenigstens einem der Ansprüche 1 bis 8, **dadurch gekennzeichnet, dass** nur ein erster Vereiniger verwendet wird oder mehrere erste Vereiniger im Parallelbetrieb verwendet werden.

10. Verfahren gemäß wenigstens einem der Ansprüche 1 bis 10, **dadurch gekennzeichnet, dass** das in dem oder den ersten Kondensator(en) und dem oder den Nachkondensator(en) kondensierte Phosgen in einer gemeinsamer Flüssig-Phosgen-Vorlage gesammelt wird.
